# FASCICULE DE BREVET EUROPEEN

(11) **EP 0 974 447 B1**
(45) Date de publication et mention de la délivrance du brevet: **19.06.2002**
(21) Numéro de dépôt: 99202320.0
(22) Date de dépôt: 14.07.1999
(51) Int. Cl.: B29C 65/20

(54) **Machine de soudage d'objets creux et procédé pour souder ces objets**
Vorrichtung und Verfahren zum Verschweissen von hohlen Gegenständen
Apparatus and process for welding hollow parts

(30) Priorité: 22.07.1998 BE 9800551
(43) Date de publication de la demande: 26.01.2000
(73) Titulaire: SOLVAY (Société Anonyme), 1050 Bruxelles (BE)
(72) Inventeur: Coninck, Hubert, 7800 ATH (BE); Gilliard, Pierre, 1120 Bruxelles (BE); Op De Beeck, Joel, 2570 Duffel (BE); Van Meulebeke, Guy, 1160 Bruxelles (BE); Van Schaftingen, Jules-Joseph, 1300 Wavre (BE)
(74) Mandataire: Decamps, Alain René François

(56) Documents cités:
- DE-A- 2 433 533
- DE-A- 19 627 742
- DE-U- 9 213 424
- US-A- 2 384 014
- US-A- 2 665 738
- US-A- 3 391 045
- US-A- 3 919 034
- US-A- 5 240 536
- PATENT ABSTRACTS OF JAPAN vol. 013, no. 217 (M-828), 22 mai 1989 (1989-05-22) -& JP 01 034722 A (KYORAKU CO LTD), 6 février 1989 (1989-02-06)
- PATENT ABSTRACTS OF JAPAN vol. 013, no. 555 (M-904), 11 décembre 1989 (1989-12-11) -& JP 01 229616 A (KOBAYASHI KOGYO KK), 13 septembre 1989 (1989-09-13)

## Description

La présente invention concerne une machine pour le soudage d'objets creux en matière plastique.

Elle concerne plus précisément une machine pour la réalisation d'au moins un assemblage selon la technique du miroir chauffant.

La fabrication d'objets de formes complexes fait souvent appel à des techniques d'assemblage d'objets élémentaires plus petits qu'il est plus aisé de réaliser dans un appareillage moins élaboré et de dimensions plus petites que celui qui serait requis pour fabriquer l'objet complet.

L'utilisation des matières plastiques a permis, grâce à leurs excellentes propriétés de mise en forme et d'usinage la conception et la réalisation de pièces et d'objets finis aux formes les plus variées et les plus complexes, dépassant le plus souvent de loin la versatilité des métaux et des matières naturelles. A mesure que la complexité des objets fabriqués à partir de ces matières plastiques augmentait, s'est cependant fait sentir malgré tout la nécessité de procéder par assemblage de pièces ou d'objets plus petits et moins complexes afin de faciliter le processus de fabrication et d'en diminuer le coût. Par ailleurs, on rencontre de manière croissante le besoin de pouvoir intégrer, plus facilement que par les méthodes traditionnelles, des éléments accessoires à l'intérieur des objets.

Ces considérations s'appliquent particulièrement au domaine des objets creux qui doivent répondre à des exigences de forme et d'encombrement complexes, tels que ceux qui sont utilisés dans les domaines et applications de haute technicité les plus divers. En bonne place parmi ces objets on rencontre les tubes et canalisations de forme complexe devant tenir dans des espaces confinés ainsi que les flacons et réservoirs qui doivent se loger dans des espaces de contours les plus divers et complexes.

Les matières plastiques sont souvent utilisées pour la fabrication de tels objets creux. Lorsque la sophistication de leur surface externe est élevée, on a parfois recours à des techniques d'assemblage de plusieurs éléments plus simples à fabriquer. Une technique favorite dans le cas de matières plastiques permet d'obtenir des corps creux complexes par soudage d'objets plus petits et plus simples.

Le soudage d'objets creux en matière plastique nécessite la fusion locale de la matière à l'endroit des lèvres de soudure suivie du pressage des objets à souder jusqu'au retour à l'état solide de la matière des lèvres sous l'effet du refroidissement. L'apport de chaleur requis pour fondre la matière plastique à partir de la surface des lèvres se fait par différents procédés qui comprennent la génération de calories, notamment par l'effet d'ultrasons, par le frottement, par le rayonnement infrarouge ou par conduction à partir d'un outil chauffé.

Une technique par conduction s'est bien développée (voir par exemple US-A-5 240 536 et US-A-3 391 045) : la technique du soudage par outil chauffant appliqué sur les lèvres de soudure, dénommée technique du miroir chauffant ("hot plate").

Le brevet britannique 1601468 décrit un procédé et un appareil pour souder au moyen d'un miroir chauffant des demi-boîtes parallélipipédiques rectangulaires en matière plastique variée dont une face manque afin d'obtenir une boîte fermée.

La technique est adaptée à la réalisation de boîtes facilement déformables dont l'épaisseur est faible par rapport aux autres dimensions de l'objet. Les demi-boîtes à souder sont fixées chacune à l'intérieur d'un moule et on applique les parois contre la surface interne du moule afin de faire correspondre parfaitement les deux demi-boîtes et de présenter au soudage des lèvres rigoureusement parallèles.

L'usage de moules de mise en forme complique cependant fortement les machines de soudage par le fait qu'ils nécessitent des machines volumineuses, des manipulations nombreuses des objets à souder et le maintien à la température requise des objets pendant de longues périodes. Il en résulte des machines plus encombrantes et plus délicates à entretenir qui s'avèrent généralement beaucoup plus coûteuses et moins fiables que les machines de soudage simples dépourvues de moyens de mise en forme des objets à souder.

L'invention a pour but de fournir une machine de soudage d'objets creux en matière plastique qui ne présente pas les inconvénients des machines connues. En particulier, elle concerne des machines plus économiques de plus petite taille, plus simples, de temps de cycle plus court et qui permettent l'introduction plus facile d'accessoires à l'intérieur des assemblages.

A cet effet l'invention concerne une machine de soudage d'objets creux en matière plastique pour la réalisation d'au moins un assemblage selon la technique du miroir chauffant comprenant un miroir et des moyens de chauffage de ce miroir (miroir "chaud"), des moyens de maintien et de positionnement des objets à souder face à face de manière à pouvoir rapprocher des lèvres de soudure qui se correspondent à la surface de chaque objet, des moyens de déplacement du miroir chaud entre les lèvres de soudure et des moyens de pression des objets sur le miroir chaud, selon laquelle elle comprend aussi un miroir dont la température ne permet pas de fondre la matière plastique avec laquelle il peut être mis en contact (miroir "froid").

Par soudage, on entend désigner l'opération d'assemblage d'au moins deux objets qui comporte une étape de fusion réalisée à partir d'au moins une portion de la surface de chaque objet, une étape de mise en contact des objets et une dernière étape de refroidissement jusqu'au retour vers l'état solide de la matière fondue, en vue de l'obtention d'un assemblage d'objets composite qui se comporte, du point de vue de la mécanique, comme un objet unique.

Les objets à souder peuvent être de nature différente ou de même nature.

En particulier, les objets à souder peuvent comprendre des produits purs, des compositions chimiques, des matériaux composites, des alliages ou des substances naturelles, seules ou en mélange.

Tous les types de matière plastique peuvent convenir. Des matières plastiques convenant bien appartiennent à la catégorie des matières thermoplastiques.

Les matières thermoplastiques de synthèse sont préférées. Tout type de polymère ou de copolymère thermoplastique dont la température de fusion est inférieure à la température de décomposition conviennent. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire. En particulier, on peut utiliser des polyoléfines, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres de verre, les fibres naturelles ou polymériques. Il est également possible d'utiliser des structures multicouches constituées de couches comprenant au moins un des polymères ou copolymères décrits supra.

L'opération de soudage peut s'effectuer, dans la machine selon l'invention, par apport de matière nouvelle supplémentaire par rapport à celle des objets à souder. Dans le cas de matières thermoplastiques, on utilise de préférence comme matière nouvelle, une matière comprise dans au moins un des objets à souder.

L'opération de soudage peut aussi s'effectuer sans apport de matière nouvelle, par simple interpénétration de matière à l'endroit des surfaces soudées.

La machine de soudage conforme à l'invention convient tout particulièrement bien pour le soudage sans apport de matière nouvelle.

La machine de soudage selon l'invention réalise des assemblages d'objets creux en matière plastique. Par objets creux, on désigne tout objet dont la surface présente au moins une partie vide ou concave. En particulier, la machine selon l'invention est bien adaptée au soudage d'objets creux qui se présentent sous la forme de coquilles en matière plastique que l'on soude bords à bords.

On peut souder plus de deux objets en matière plastique avec la machine selon l'invention. De préférence, on soude deux objets.

La machine selon l'invention permet de réaliser simultanément au moins un assemblage en matière plastique.

La technique du miroir chauffant mise en oeuvre par la machine selon l'invention est basée sur le principe de la fusion locale des parties de surfaces à souder, par contact au moyen d'un outil chauffé appelé miroir ou miroir "chaud". Celui-ci sera réalisé dans un matériau résistant à la chaleur et dont la rugosité de surface est très faible, afin de maximiser le contact avec la matière plastique à fondre. Tous les matériaux qui ont une bonne capacité calorifique et qui peuvent être usinés jusqu'au poli miroir conviennent. Il est cependant nécessaire qu'ils soient en outre inertes chimiquement vis-à-vis de la matière plastique à souder et qu'ils n'adhèrent pas à cette dernière. Parmi les matériaux possibles pour les miroirs, on peut citer, de manière non limitative, les métaux polis et les céramiques.

Des miroirs chauds en métal poli conviennent bien. On utilise des métaux polis mécaniquement ou polis chimiquement. On peut aussi déposer sur la surface des miroirs une pellicule lisse de matière par voie physique ou chimique.

Une solution intéressante au problème de l'adhérence du miroir chaud est, en variante, de recouvrir celui-ci d'une gaine en matière plastique résistante à la chaleur et inerte par rapport à la matière des objets à souder. Des exemples de telles matières plastiques sont les polymères fluorés tels que le polytétrafluoréthylène et le fluorure de polyvinylidène. Des miroirs métalliques recouverts d'un film de fluorure de polyvinylidène ont été employés avec succès.

La machine comporte aussi des moyens de chauffage du miroir chaud. Tout type de chauffage qui peut être mis en oeuvre dans une machine de traitement d'objets en matière plastique peut être envisagé. On peut ainsi transmettre de la chaleur au miroir chaud par conductibilité, par convexion ou par rayonnement, ou encore générer directement la chaleur au sein du miroir par des techniques électro-magnétiques.

Dans la machine, le miroir chaud peut, par exemple, être réchauffé par contact avec une résistance électrique elle-même chauffée par effet Joule. Il peut aussi, en variante, être plongé dans un courant d'air chaud chauffé par contact direct avec une flamme vive ou encore, plongé dans un bain liquide maintenu à haute température. Une autre variante possible est de le plonger dans une cavité dont les parois sont à haute température. Une variante supplémentaire comporte le chauffage du miroir par induction électrique dans un champ magnétique alternatif ou encore le chauffage du miroir par plongée dans un liquide aqueux au sein d'un champ de micro-ondes.

La machine selon l'invention comprend avantageusement des moyens de maintien des objets à souder. Les moyens de maintien des objets sont ceux qui reçoivent et supportent face à face les objets qui subissent l'opération de soudage. Ils sont généralement réalisés sous forme de plateaux munis de dispositifs d'ancrage des objets.

Dans la machine selon l'invention, on trouve aussi des moyens de positionnement des objets à souder. Ces moyens permettent d'ajuster de manière précise le rapprochement face à face des lèvres de soudure des objets. Ils permettent le positionnement de ces lèvres à une distance de séparation la plus faible compatible avec la possibilité d'encore venir intercaler un miroir chaud dans le faible intervalle de séparation. Avantageusement, ils sont aussi capables de régler le positionnement des objets dans l'espace pour que les lèvres de soudure se correspondent au mieux sur la totalité de leur longueur. Tout système de positionnement de précision peut convenir, en particulier, des systèmes à crémaillère ou à vérins peuvent être incorporés dans la machine afin de pouvoir rapprocher les objets à souder de manière très précise

Par lèvres de soudure, on entend désigner les parties de la surface des objets creux qui sont chauffées au moyen du miroir et mises en contact pour le soudage des objets.

En particulier, les moyens de positionnement comprennent avantageusement des moyens de manipulation des objets à souder. Par manipulation, on entend l'amenée des objets creux dans la machine. De préférence, la manipulation des objets comprend aussi le retrait de l'assemblage de la machine après soudage. L'amenée et le retrait des objets creux dans la machine peut par exemple se faire par chargement direct de la machine à l'aide d'un robot ou par un opérateur. Ils peuvent aussi s'effectuer par transfert d'une palette porte-objet à partir d'un ou plusieurs postes de chargement/déchargement extérieur à la machine. Les moyens de positionnement peuvent être réalisés sous différentes formes pratiques comprenant, non limitativement, un robot, une bande transporteuse, une chaîne, une courroie, des rouleaux entraînés, des guides et tunnels par gravité ou sous l'impulsion d'un fluide propulseur.

Dans le but d'améliorer la précision du positionnement et du déplacement des objets, on peut munir les moyens de positionnement d'un ou plusieurs asservissements comprenant des capteurs associés à un servo-régulateur de position. Ce dernier peut indifféremment appartenir à la catégorie des régulateurs pneumatiques ou à celle des régulateurs électroniques, en particulier ceux qui comprennent des éléments de logique programmée tels que les automates programmables ou les systèmes à micro-ordinateurs comprenant au moins un microprocesseur et un programme enregistré sur un support adéquat.

La machine conforme à l'invention doit aussi comprendre des moyens de déplacement du miroir. On entend par là des moyens connus pour intercaler les miroirs entre les lèvres de soudure avant l'opération de soudage. Cette machine doit aussi comprendre des moyens pour retirer le miroir lorsqu'il a terminé de chauffer les lèvres de soudure jusqu'à ce que celles-ci amorcent leur fusion à partir de leur surface. Les moyens pour intercaler le miroir entre les lèvres de soudure et ceux pour retirer le miroir après chauffage de celles-ci peuvent être uniques ou distincts. De préférence, on utilise les mêmes moyens pour intercaler le miroir et pour le retirer après chauffage des lèvres.

La machine selon l'invention comprend aussi des moyens de pression des objets sur le miroir. Tout moyen apte à pouvoir maintenir les objets en contact sous l'effet d'une pression donnée peut convenir. On peut, par exemple, équiper des plateaux porte-objets de systèmes de vérins hydrauliques ou pneumatiques ou de systèmes vis-écrou capables d'imprimer de manière durable une pression suffisante aux objets en contact. Par pression suffisante, on désigne une pression au moins égale à celle qui permet l'interpénétration de matière plastique fondue sur toute la surface des lèvres. Cette pression doit cependant rester inférieure à une certaine limite compatible avec l'absence de déformation mécanique des parties non fondues des objets en contact et la perte par écoulement dans une direction perpendiculaire à la direction de pressage d'une partie excessive de matière fondue.

Selon l'invention, la machine comprend aussi un miroir froid, ou miroir dont la température ne permet pas de fondre la matière plastique avec laquelle il peut être mis en contact. Le miroir froid selon l'invention comprend tout miroir pour lequel existe dans la machine conforme à l'invention au moins un moyen de chauffage capable de le porter à une température inférieure à la température définie à la phrase précédente. Il comprend aussi les miroirs dépourvus de moyens de chauffage.

Selon une forme de réalisation particulière de la machine conforme à l'invention, le miroir chaud et le miroir froid sont un seul et même miroir comprenant au moins une zone chaude et au moins une zone froide, la signification des termes "chaude" et "froide" étant identique à celle donnée supra pour les miroirs.

Par zones, on entend des parties de la surface totale du miroir, contiguës ou non, qui sont capables de présenter une température différente, positive ou négative, d'au moins 5 °C par rapport à celle de toute autre partie de la surface de ce miroir. De préférence, elles présentent une différence de température d'au moins 20 °C par rapport à ces autres parties.

La machine de soudage selon l'invention peut comporter un miroir qui est plan.

En variante, elle peut aussi comporter un miroir qui n'est pas plan. Dans ce cas, le soudage d'objets qui présentent des lèvres de soudure de forme non plane est facilité.

Selon une autre variante, la machine selon l'invention peut comporter des moyens de chauffage local des objets à souder autres que les miroirs chauds destinés à chauffer les lèvres de soudure. Ces moyens peuvent permettre le réchauffement d'autres zones des objets à souder que les lèvres de soudure. Un exemple de tels moyens sont des sources de rayonnement infrarouge. Celles-ci peuvent être présentes à l'intérieur de la machine selon l'invention. Comme exemple de telles sources, on peut citer les lampes à rayonnement infrarouge.

La machine de soudage décrite supra permet de fabriquer aisément des objets complexes en un temps plus court et avec une moindre consommation d'énergie que par les procédés classiques.

Dès lors, l'invention concerne aussi un procédé pour souder des objets creux en matière plastique au cours d'un cycle de soudage selon lequel :
a) au début du cycle, on positionne au moins deux objets à souder de façon à présenter leurs lèvres de soudure face à face,
b) on déplace un miroir dont la température est inférieure à celle requise pour provoquer la fusion locale de la matière plastique des lèvres au contact du miroir (miroir "froid") et on l'amène entre les lèvres de soudure de chaque objet qui se font vis-à-vis,
c) on presse les objets sur les deux faces du miroir froid avec une pression et pendant le temps nécessaire à déformer le profil des lèvres de soudure et ajuster au mieux leur correspondance,
d) on écarte les objets du miroir froid,
e) on retire le miroir froid,
f) on déplace un miroir chaud et on l'amène entre les lèvres de soudure de chaque objet qui se font vis-à-vis, la température du miroir étant suffisante pour pouvoir fondre par contact la matière plastique à souder,
g) on presse les objets sur les deux faces du miroir chaud, pendant un temps au moins suffisant pour amorcer la fusion des objets à partir de la surface des lèvres en contact avec le miroir chaud,
h) on écarte les objets du miroir chaud,
i) on retire le miroir chaud,
j) on presse les objets les uns contre les autres de façon à mettre en contact les lèvres chauffées, pendant le temps nécessaire au soudage et au retour vers la phase solide de la matière fondue,
k) on enlève l'assemblage ainsi obtenu.

Tous les termes utilisés dans la phrase précédente ont la même définition que celle qui en a été donnée dans la description de la machine supra.

Par cycle de soudage, on désigne en outre l'ensemble des opérations nécessaires à la fabrication d'au moins un assemblage complet résultant du soudage d'au moins deux objets creux. Les opérations du cycle peuvent être reproduites à volonté dans un ordre inchangé pour produire un grand nombre d'objets identiques à ceux obtenus à l'issue du premier cycle.

Conformément au procédé selon l'invention, la température du miroir chaud doit être suffisante pour pouvoir fondre par contact la matière plastique à souder. La température du miroir chaud doit être soigneusement adaptée à la nature de la matière plastique utilisée. Il importe cependant que cette température ne soit pas exagérément élevée afin, d'une part, de ne pas décomposer la matière plastique à l'endroit des lèvres de soudure mis en contact avec ce miroir et, d'autre part, pour ne pas provoquer la fusion d'une trop grande quantité de matière plastique. En pratique, on choisit une température inférieure à la température qui produit la décomposition de la matière plastique pour la durée du cycle de soudage choisie.

De même, le temps de pression des objets sur le miroir chaud doit être réglé pour au moins amorcer la fusion des objets à partir de la surface des lèvres, tout en limitant les risques de fusion d'une trop grande quantité de matière.

De préférence, on veille à ce que la fusion de matière qui débute à partir de la surface des lèvres ne s'étende pas, perpendiculairement à celle-ci, sur une profondeur supérieure à l'épaisseur des objets à souder

Selon l'invention, la température du miroir froid doit rester suffisamment modérée pour éviter la fusion locale de la matière plastique avec laquelle il est mis en contact. Elle pourra cependant atteindre le niveau correspondant à celui du ramollissement de cette matière plastique. Par ramollissement, on entend la modification des caractéristiques physiques de la matière plastique dès qu'elle atteint et dépasse sa température H.D.T. ("Heat Deflection Temperature", mesurée selon la norme ISO N° 75). De préférence, la température des éléments de miroir froids peut prendre toute valeur commençant à ce point de ramollissement et se terminant à une valeur immédiatement inférieure à la température du début de la plage de fusion de la matière plastique considérée.

Dans une forme particulière de réalisation du procédé selon l'invention, on peut faciliter la déformation des objets à souder en créant au moins une zone de déformation préférentielle dans au moins un des objets, par exemple en variant localement l'épaisseur ou encore par l'insertion de plis déformables.

Un autre moyen de faciliter la déformation est de chauffer localement au moins une zone précise d'au moins un objet ou l'ensemble de celui-ci.

Un autre moyen de faciliter la déformation est encore de déformer localement au moins un des objets à l'aide d'un outil conformateur qui applique un effort perpendiculairement à celui déjà exercé par la presse.

Pour chaque matière plastique particulière, on optimise les paramètres de température du miroir froid ainsi que des pressions appliquées sur les objets et du temps requis pour obtenir un bon ajustage de la correspondance des lèvres et une mise à dimension adéquate. Pour chaque cas d'espèce, les meilleurs compromis pour la fixation des valeurs à attribuer à chacun de ces trois paramètres dépendra des propriétés mécaniques intrinsèques de la matière plastique considérée, de la forme des éléments de miroir ainsi que de la forme et de la dimension des objets à souder.

Contrairement à l'opération de pressage lors du soudage proprement dit, le pressage dans l'étape préliminaire de mise à dimension doit être effectué avec une pression suffisante pour déformer les objets.

Une variante intéressante au procédé selon l'invention est celle dans laquelle le miroir froid et le miroir chaud sont un seul et même miroir comprenant au moins une zone froide, c'est-à-dire dont la température ne permet pas de fondre la matière plastique et au moins une zone chaude, c'est-à-dire chauffée à une température suffisante pour pouvoir fondre la matière plastique avec laquelle elle peut être mise en contact.

Une autre variante au procédé selon l'invention est celle qui met en oeuvre un miroir non plan. Selon ce procédé particulier, on peut mettre en oeuvre un miroir chaud et un miroir froid distinct. Alternativement, ce procédé particulier peut aussi être appliqué lorsque le miroir chaud et le miroir froid sont un seul et même miroir, comme décrit supra.

Dans une autre forme de réalisation du procédé selon l'invention, on peut aussi poursuivre la mise à dimension par pressage des objets sur le miroir chaud, immédiatement avant l'opération de soudage. On peut, par exemple, imposer un profil de pression durant la période de pressage sur le miroir chaud de façon à ce que la pression appliquée en début de période, pour la mise à dimension, soit différente de celle exercée par la suite, dès que la fusion de la matière plastique des lèvres a commencé et que l'opération de soudage commence.

Le procédé selon l'invention est bien adapté au soudage d'au moins deux objets creux en matière plastique pour fabriquer un réservoir. Il est particulièrement bien adapté à la fabrication de réservoirs à carburant. Il convient tout particulièrement bien pour la fabrication de réservoirs à carburants destinés à équiper les véhicules automobiles.

Le procédé selon l'invention est bien adapté au soudage d'au moins deux objets creux en matière plastique obtenus selon la technique de moulage par injection.

L'invention concerne également l'utilisation de la machine telle que décrite plus haut pour la réalisation de réservoirs en matière plastique par soudage d'au moins deux objets creux en matière plastique.

En particulier, elle concerne l'utilisation de cette machine pour la fabrication de réservoirs à carburant en matière plastique. Plus particulièrement encore, elle concerne la fabrication de réservoirs à carburant en matière plastique par soudage d'au moins deux objets creux en matière plastique obtenus selon la technique du moulage par injection.

Les figures 1 à 3 annexées illustrent de manière non limitative certains modes de réalisation de la machine conforme à l'invention ainsi que du procédé utilisant une machine semblable pour fabriquer des réservoirs à carburant à partir de coquilles creuses obtenues par moulage par injection.

La figure 1 est une représentation schématique générale d'une machine de soudage selon l'invention qui illustre notamment les moyens de manipulation des objets à souder.

La figure 2 montre le détail d'une réalisation particulière des moyens de positionnement et de déplacement des objets ainsi que du miroir chaud et du miroir froid.

La figure 3 illustre schématiquement un cycle complet du procédé de soudage de deux objets creux comprenant une étape de mise à dimension par pressage contre un miroir froid.

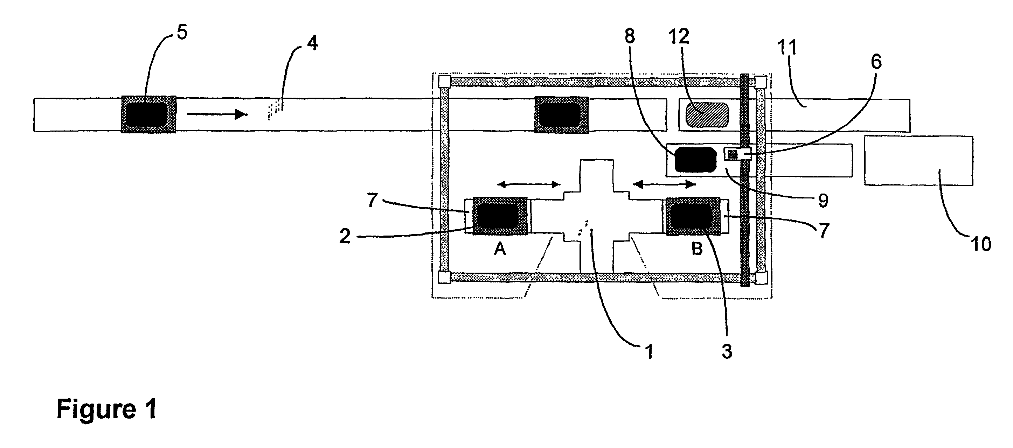

La figure 1 représente une vue en plan d'une machine selon l'invention adaptée au soudage de deux coquilles creuses en matière plastique pour la réalisation de réservoirs à carburant pour véhicule automobile. Un corps (1) de machine, comprend deux postes de chargement et déchargement (2) et (3) et une bande transporteuse (4) qui amène deux coquilles (5) en matière plastique dans le périmètre d'un robot à portique (6). Celui-ci assure le chargement et le déchargement des coquilles (5) et leur dépôt sur des plateaux (7) disposés dans chacun des deux postes (2) et (3) référencés A et B sur la figure. Les postes A et B fonctionnent en alternance pour le chargement et le déchargement, un des postes étant en position de chargement pendant que l'autre est en déchargement. Ces opérations de chargement et déchargement sont concommitantes avec l'opération de soudage effectuée dans le corps (1).

Après soudage, le réservoir obtenu (8) est déchargé par le robot (6) sur le tapis roulant (9). Celui-ci amène le réservoir (8) en face d'un poste de contrôle et d'emballage (10). Un deuxième tapis roulant (11) est chargé de l'évacuation des rejets non-conformes (12).

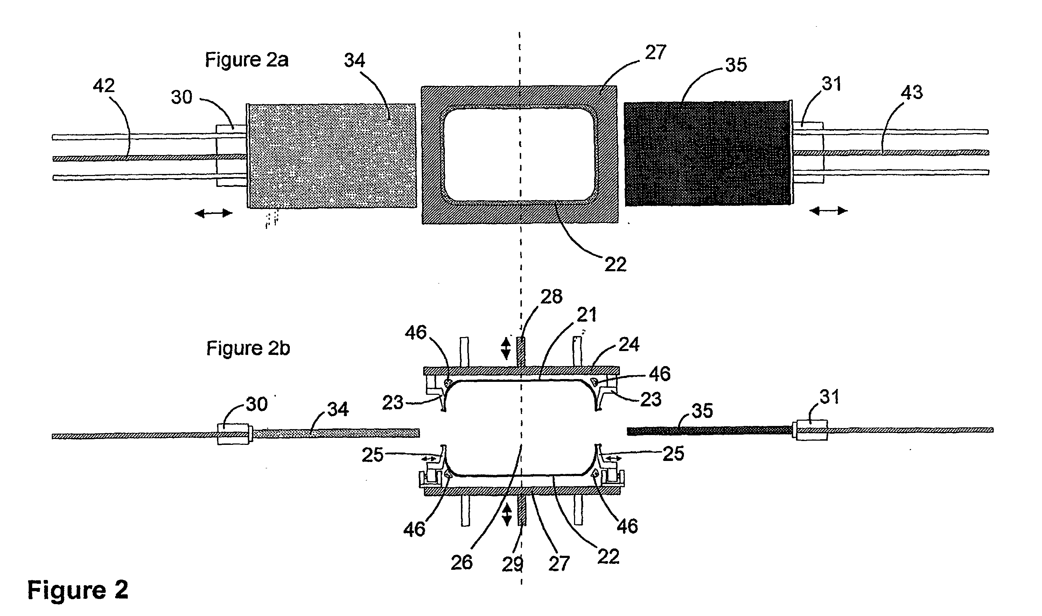

La figure 2 est une vue en plan (figure 2a) et en élévation (figure 2b) d'une coupe dans une partie d'une machine de soudage selon l'invention dans laquelle deux coquilles (21) et (22) en matière plastique sont soudées pour fabriquer un réservoir à carburant. La coquille supérieure (21) est pincée entre des bras fixes (23) de support portés par un plateau supérieur (24). La coquille inférieure (22) est pincée entre des bras (25) qui peuvent se mouvoir parallèlement au plateau au moyen d'un système à vérins, de façon conjointe et dans les mêmes direction et sens, de manière à pouvoir ajuster finement la position de l'axe (26) de la coquille inférieure (22) sur celui de la coquille supérieure (21). Les bras mobiles (25) sont, via le système à vérins, solidaires d'un plateau inférieur (27). Les plateaux supérieur (24) et inférieur (27) sont également solidaires d'autres vérins (28) et (29) qui assurent le positionnement vertical et le rapprochement des coquilles à souder. Deux porte-miroirs (30) et (31) situés sur le pourtour des plateaux (24) et (27) à une hauteur située dans l'espace délimité par ceux-ci portent chacun un miroir (34) et (35). Le miroir (34) est un miroir froid et le miroir (35), un miroir chaud chauffé en permanence par une résistance électrique. Des vérins de précision (42) et (43) assurent le déplacement ainsi que le positionnement fin des miroirs (42) et (43). Des lampes infra-rouge (46) sont disposées dans les interstices laissés libres à proximité des bras (25).

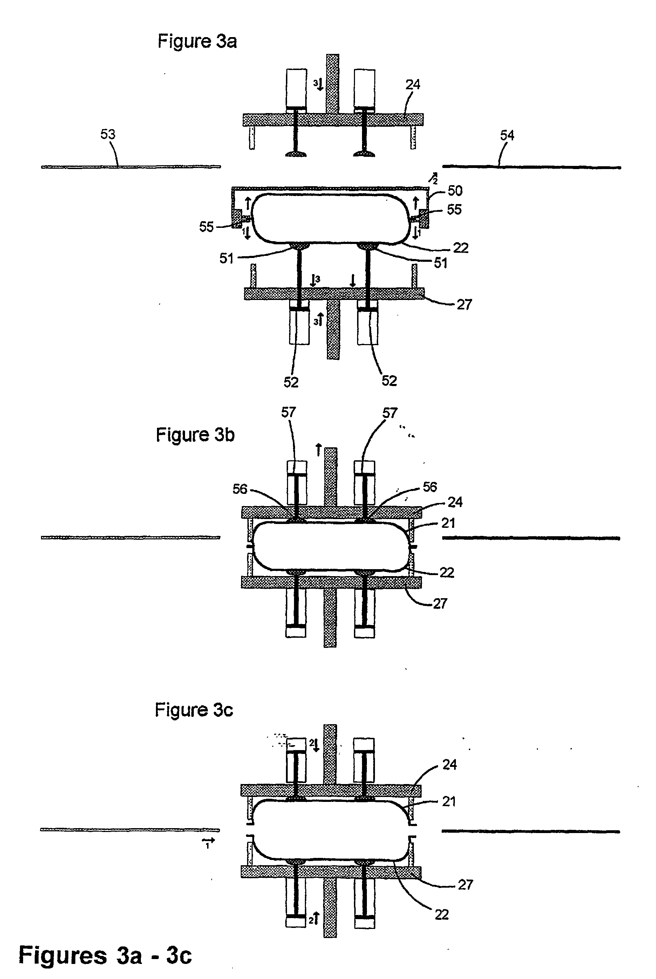

La figure 3a montre l'intérieur d'une machine de soudage selon l'invention au début d'un cycle, lorsque les plateaux (24) et (27) se trouvent dans leur position la plus écartée et que le robot (50) introduit dans la machine deux coquilles (21) et (22) en matière plastique et les dépose sur les ventouses (51) garnissant l'extrémité d'un piston hydraulique (52). A ce moment, les miroirs (53) et (54) se trouvent dans une position écartée, en-dehors du champ des plateaux (24) et (27). Lorsque les ventouses (51) se sont solidarisées avec la coquille inférieure (22), des pinces (55) solidaires du robot (50) supportant les coquilles et les maintenant l'une contre l'autre s'ouvrent et le robot (50) s'éloigne, abandonnant la coquille supérieure (21) posée sur la coquille inférieure (22). Ensuite, les plateaux (24) et (27) se rapprochent.

La figure 3b montre le schéma de la machine lorsque le plateau supérieur (24) a rejoint la coquille supérieure (21) et que les ventouses (56) des pistons hydrauliques supérieurs (57) ont solidarisé la coquille supérieure (21) avec le plateau supérieur (24). Le plateau inférieur (27) portant la coquille inférieure (22) s'est aussi déplacé vers le haut et les deux coquilles (21) et (22) se font face à très courte distance l'une de l'autre.

A la figure 3c, on voit que les plateaux (24) et (27) se sont écartés d'une distance calibrée suffisante pour permettre l'insertion du miroir froid (53) entre les lèvres de soudure. Le miroir froid se déplace en direction de l'axe des plateaux (24) et (27) et s'arrête lorsqu'il se trouve situé au droit des coquilles (21) et (22) en matière plastique.

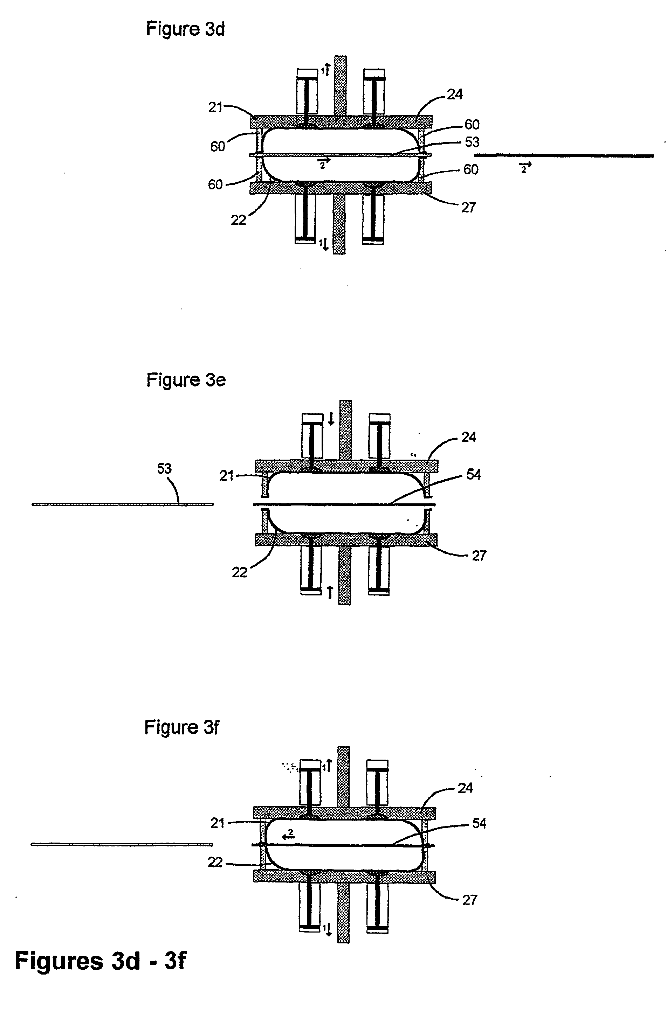

Les plateaux (24) et (27) se referment ensuite sur le miroir froid (53) comme schématisé à la figure 3d. Une pression calibrée est ensuite appliquée sur les plateaux (24) et (27) afin de mettre en forme définitive les coquilles (21) et (22) et d'égaliser les lèvres de soudure. Des guides (60) imposent aux coquilles (21) et (22) leur forme définitive et font office de moule. Au bout d'une durée suffisante à la mise à dimension des coquilles (21) et (22), on voit à la figure 3e que les plateaux (24) et (27) s'écartent à nouveau légèrement et le miroir froid (53) se remet en mouvement et s'arrête lorsqu'il se trouve hors du champ des coquilles (21) et (22). Dans le même temps, le miroir chaud (54) se met en mouvement en direction de l'axe des plateaux (24) et (27). Le mouvement du miroir chaud (54) cesse lorsqu'il se trouve dans le champ des coquilles (21) et (22).

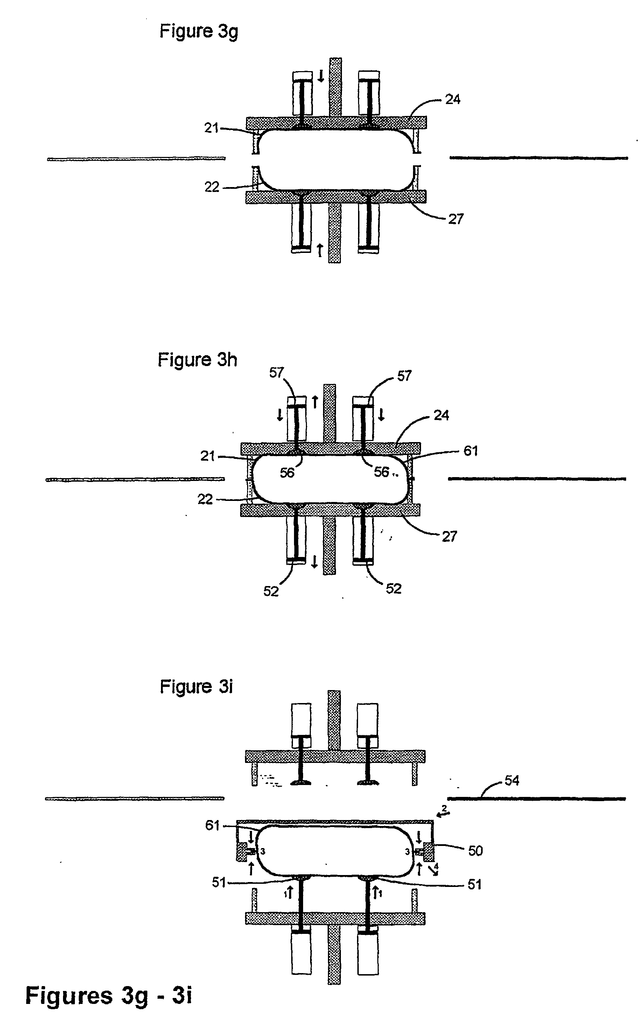

Les plateaux (24) et (27) se referment alors sur le miroir chaud (54), tel que schématisé à la figure 3f. Après avoir appliqué une pression calibrée sur les plateaux (24) et (27) le temps nécessaire à la fusion locale de la matière plastique à partir de la surface des lèvres de soudure, les plateaux (24) et (27) se rouvrent et le miroir (54) se remet en mouvement inverse et s'éloigne jusqu'à se trouver hors du champ des coquilles (21) et (22), situation schématisée à la figure 3g.

Les plateaux (24) et (27) se rapprochent ensuite jusqu'à faire se toucher les lèvres de soudure des coquilles (21) et (22), situation représentée à la figure 3h.

Une pression calibrée est ensuite appliquée sur les plateaux (24) et (27) pendant le temps nécessaire à l'interpénétration de la matière plastique des lèvres et de leur retour subséquent vers l'état solide. Les plateaux (24) et (27) s'ouvrent ensuite en même temps que les pistons hydrauliques inférieurs (52) et supérieurs (57) détachent le réservoir assemblé (61) des plateaux (24) et (27). Dans le même temps, les ventouses supérieures (56) se détachent de la paroi supérieure du réservoir (61).

A la figure 3i, on voit alors le robot (50) se remettre en place et venir pincer le réservoir (61). Les ventouses inférieures (51) relâchent ensuite leur emprise et le réservoir (61) est alors emporté par le robot (50) hors du champ intérieur de la machine pour subir les opérations d'ébarbage et d'emballage (non représentées). Un nouveau cycle peut alors recommencer.

## Revendications

1. Machine de soudage d'objets creux en matière plastique pour la réalisation d'au moins un assemblage selon la technique du miroir chauffant comprenant un miroir et des moyens de chauffage de ce miroir (miroir "chaud"), des moyens de maintien et de positionnement des objets à souder face à face de manière à pouvoir rapprocher des lèvres de soudure qui se correspondent à la surface de chaque objet, des moyens de déplacement du miroir chaud entre les lèvres de soudure et des moyens de pression des objets sur le miroir chaud, **caractérisée en ce qu'**elle comprend aussi un miroir dont la température ne permet pas de fondre la matière plastique avec laquelle il peut être mis en contact (miroir "froid").

2. Machine de soudage selon la revendication 1, **caractérisée en ce que** le miroir chaud et le miroir froid sont un seul et même miroir comprenant au moins une zone chaude et au moins une zone froide.

3. Machine de soudage selon une quelconque des revendications précédentes, **caractérisée en ce que** le miroir n'est pas plan.

4. Procédé pour souder des objets creux en matière plastique au cours d'un cycle de soudage selon lequel :
a) au début du cycle, on positionne au moins deux objets à souder de façon à présenter leurs lèvres de soudure face à face,
b) on déplace un miroir dont la température est inférieure à celle requise pour provoquer la fusion locale de la matière plastique des lèvres au contact du miroir (miroir "froid") et on l' amène entre les lèvres de soudure de chaque objet qui se font vis-à-vis,
c) on presse les objets sur les deux faces du miroir froid avec une pression et pendant le temps nécessaires à déformer le profil des lèvres de soudure et ajuster au mieux leur correspondance,
d) on écarte les objets du miroir froid,
e) on retire le miroir froid,
f) on déplace un miroir chaud et on l'amène entre les lèvres de soudure de chaque objet qui se font vis-à-vis, la température du miroir étant suffisante pour pouvoir fondre par contact la matière plastique à souder,
g) on presse les objets sur les deux faces du miroir chaud, pendant un temps au moins suffisant pour amorcer la fusion des objets à partir de la surface des lèvres en contact avec le miroir chaud,
h) on écarte les objets du miroir chaud,
i) on retire le miroir chaud,
j) on presse les objets les uns contre les autres de façon à mettre en contact les lèvres chauffées, pendant le temps nécessaire au soudage et au retour vers la phase solide de la matière fondue,
k) on enlève l'assemblage ainsi obtenu.

5. Procédé selon la revendication 4, **caractérisé en ce que** le miroir froid et le miroir chaud sont un seul et même miroir comprenant au moins une zone froide, c'est-à-dire dont la température ne permet pas de fondre la matière plastique et au moins une zone chaude, c'est-à-dire chauffée à une température suffisante pour pouvoir fondre la matière plastique avec laquelle elle peut être mise en contact.

6. Procédé selon une quelconque des revendications 4 et 5, **caractérisé en ce que** le miroir n'est pas plan.

7. Procédé selon une quelconque des revendications 4 à 6, **caractérisé en ce qu'**on poursuit la mise à dimension par pressage des objets sur le miroir chaud, immédiatement avant l'opération de soudage.

8. Procédé selon une quelconque des revendications 4 à 7, **caractérisé en ce qu'**on soude au moins deux objets creux en matière plastique injectés pour fabriquer un réservoir à carburant.

9. Utilisation de la machine selon une quelconque des revendications 1 à 3 pour fabriquer des réservoirs à carburant en matière plastique par soudage d'au moins deux objets creux en matière plastique injectés.

## Patentansprüche

1. Maschine zum Verschweißen von hohlen Gegenständen aus Kunststoff zur Herstellung von mindestens einem Verband nach der Heizspiegeltechnik, umfassend einen Spiegel und Einrichtungen zum Erhitzen dieses Spiegels ("heißer" Spiegel), Einrichtungen zum Halten und zum Positionieren der zu verschweißenden Gegenstände in Gegenüberstellung, um Schweißlippen, die sich an der Oberfläche von jedem Gegenstand entsprechen, an einander annähern zu können, Einrichtungen zum Verschieben des heißen Spiegels zwischen die Schweißlippen, sowie Einrichtungen zum Andrücken der Gegenstände auf den heißen Spiegel, **dadurch gekennzeichnet, dass** sie auch einen Spiegel umfasst, dessen Temperatur es nicht gestattet, den Kunststoff, mit dem er in Kontakt gebracht werden kann, zu schmelzen ("kalter" Spiegel).

2. Maschine zum Verschweißen nach Anspruch 1, **dadurch gekennzeichnet, dass** der heiße Spiegel und der kalte Spiegel ein und derselbe Spiegel sind, umfassend mindestens eine heiße Zone und mindestens eine kalte Zone.

3. Maschine zum Verschweißen nach einem der vorangehenden Ansprüche, **dadurch gekennzeichnet, dass** der Spiegel nicht eben ist.

4. Verfahren zum Verschweißen von hohlen Gegenständen aus Kunststoff im Verlauf eines Schweißzyklus, bei dem:
a) man am Anfang des Zyklus mindestens zwei zu verschweißende Gegenstände so positioniert, dass sie ihre Schweißlippen in Gegenüberstellung darbieten,
b) man einen Spiegel, dessen Temperatur niedriger ist als diejenige, die zum Herbeiführen des lokalen Schmelzens des im Kontakt mit dem Spiegel ("kalter" Spiegel) befindlichen Kunststoffs der Lippen erforderlich ist, verschiebt und man ihn zwischen die Schweißlippen von jedem Gegenstand zuführt, welche sich gegenüberliegen,
c) man die Gegenstände mit einem Druck und während des Zeitraums, die notwendig sind, um das Profil der Schweißlippen zu verformen und ihre Entsprechung so gut wie möglich einzustellen, auf die beiden Seiten des kalten Spiegels drückt,
d) man die Gegenstände vom kalten Spiegel entfernt,
e) man den kalten Spiegel zurückzieht,
f) man einen heißen Spiegel verschiebt und man ihn zwischen die Schweißlippen von jedem Gegenstand zuführt, die sich gegenüberliegen, wobei die Temperatur des Spiegels ausreichend ist, um den zu verschweißenden Kunststoff durch Kontakt schmelzen zu können,
g) man die Gegenstände während eines Zeitraums, der mindestens ausreichend ist, um das Schmelzen der Gegenstände von der im Kontakt mit dem heißen Spiegel befindlichen Oberfläche der Lippen aus einzuleiten, auf die beiden Seiten des heißen Spiegels drückt,
h) man die Gegenstände vom heißen Spiegel entfernt,
i) man den heißen Spiegel zurückzieht,
j) man die Gegenstände gegeneinander drückt, so dass die aufgeheizten Lippen während des Zeitraums, der zum Verschweißen und für die Rückkehr des geschmolzenen Materials in die feste Phase notwendig ist, in Kontakt gebracht werden,
k) man den so erhaltenen Verband entfernt.

5. Verfahren nach Anspruch 4, **dadurch gekennzeichnet, dass** der kalte Spiegel und der heiße Spiegel ein und derselbe Spiegel sind, umfassend mindestens eine kalte Zone, das heißt deren Temperatur es nicht gestattet, den Kunststoff zu schmelzen, und mindestens eine heiße Zone, das heißt auf eine Temperatur erhitzt, die ausreichend ist, um den Kunststoff, mit dem sie in Kontakt gebracht werden kann, schmelzen zu können.

6. Verfahren nach einem der Ansprüche 4 und 5, **dadurch gekennzeichnet, dass** der Spiegel nicht eben ist.

7. Verfahren nach einem der Ansprüche 4 bis 6, **dadurch gekennzeichnet, dass** man das Auf-Maß-Bringen durch Andrücken der Gegenstände auf den heißen Spiegel unmittelbar vor dem Schweißvorgang durchführt.

8. Verfahren nach einem der Ansprüche 4 bis 7, **dadurch gekennzeichnet, dass** man mindestens zwei spritzgegossene hohle Gegenstände aus Kunststoff verschweißt, um einen Kraftstoffbehälter zu fertigen.

9. Verwendung der Maschine nach einem der Ansprüche 1 bis 3 zum Fertigen von Kraftstoffbehältern aus Kunststoff durch Verschweißen von mindestens zwei spritzgegossenen hohlen Gegenständen aus Kunststoff.

## Claims

1. Machine for welding hollow plastic articles in order to produce at least one assembly using the hotplate technique, comprising a plate and means for heating this plate ("hot" plate), means for holding and positioning the articles to be welded together face to face so as to be able to bring the weld lips together, which weld lips correspond to the surface of each article, means for moving the hot plate between the weld lips and means for pressing the articles against the hot plate, **characterized in that** it also comprises a plate whose temperature does not allow the plastic with which it may be brought into contact to melt ("cold" plate).

2. Welding machine according to Claim 1, **characterized in that** the hot plate and the cold plate are one and the same plate, comprising at least one hot zone and at least one cold zone.

3. Welding machine according to any one of the preceding claims, **characterized in that** the plate is not plane.

4. Process for welding hollow plastic articles in a welding cycle in which:
a) at the start of the cycle, at least two articles to be welded together are positioned so as to present their weld lips face to face;
b) a plate, whose temperature is below that required to locally melt the plastic of the lips when they are in contact with the plate ("cold" plate), is moved and brought between the weld lips of each article which are face to face;
c) the articles are pressed against the two faces of the cold plate with a pressure and for a time necessary to deform the profile of the weld lips and to optimally adjust their correspondance;
d) the articles are moved away from the cold plate;
e) the cold plate is withdrawn;
f) a hot plate is moved and brought between the weld lips of each article which are face to face, the temperature of the plate being high enough to be able to melt, by contact with it, the plastic to be welded;
g) the articles are pressed on the two faces of the hot plate for a time at least long enough to start to melt the articles on the surface of the lips in contact with the hot plate;
h) the articles are moved away from the hot plate;
i) the hot plate is withdrawn;
j) the articles are pressed against each other so as to bring the heated lips into contact for the time necessary for welding and for returning the molten material to the solid phase; and
k) the assembly thus obtained is removed.

5. Process according to Claim 4, **characterized in that** the cold plate and the hot plate are one and the same plate comprising at least one cold region, that is to say whose temperature does not allow the plastic to melt, and at least one hot region, that is to say at a temperature high enough to be able to melt the plastic with which it can be brought into contact.

6. Process according to any one of Claims 4 and 5, **characterized in that** the plate is not plane.

7. Process according to any one of Claims 4 to 6, **characterized in that** the shaping continues by pressing the articles against the hot plate immediately before the welding operation.

8. Process according to any one of Claims 4 to 7, **characterized in that** at least two injection-moulded hollow plastic articles are welded together in order to manufacture a fuel tank.

9. Use of the machine according to any one of Claims 1 to 3 for manufacturing plastic fuel tanks by welding at least two injection-moulded hollow plastic articles together.
